Europäisches Patentamt

European Patent Office

Office européen des brevets

(19)

(11) Veröffentlichungsnummer: **0 060 803**
B1

# (12) EUROPÄISCHE PATENTSCHRIFT

(45) Veröffentlichungstag der Patentschrift:
16.07.86

(51) Int. Cl.⁴: **B 60 C 27/06,** B 60 C 27/10

(21) Anmeldenummer: **82730031.0**

(22) Anmeldetag: **12.03.82**

---

(54) Gleitschutzkette.

---

(30) Priorität: **17.03.81 DE 8108430 U**
**17.03.81 DE 3111270**

(43) Veröffentlichungstag der Anmeldung:
**22.09.82 Patentblatt 82/38**

(45) Bekanntmachung des Hinweises auf die Patenterteilung:
**16.07.86 Patentblatt 86/29**

(84) Benannte Vertragsstaaten:
**DE FR GB NL SE**

(56) Entgegenhaltungen:
**DE - A - 2 710 057**
**DE - U - 7 721 756**
**FR - E - 20 650**
**US - A - 3 036 618**
**US - A - 3 893 499**

(73) Patentinhaber: **RUD-Kettenfabrik Rieger & Dietz GmbH**
**u. Co., Friedensinsel, D-7080 Aalen 1 (DE)**

(72) Erfinder: **Rieger, Hansjörg, Dr.-Ing., Saarstrasse 48,**
**D-7080 Aalen (DE)**
Erfinder: **Hofmann, Peter, Heulenbergweg 76,**
**D-7070 Aalen-Unterkochen (DE)**

(74) Vertreter: **Böning, Manfred, Dr. Ing. et al, Patentanwälte**
**Dipl.-Ing. Dieter Jander Dr. Ing. Manfred Böning**
**Kurfürstendamm 66, D-1000 Berlin 15 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Gleitschutzkette für Fahrzeugreifen mit je eine bei montierter Kette gegen die Innenseite und die Aussenseite des Reifens zur Anlage kommenden Halterung für sich über die Lauffläche erstreckende, drehbar an der inneren Halterung gelagerte Kettenstrangabschnitte, bei der zum Spannen der über den Reifen stülpbaren, von einem federnden Stahlbügel gebildeten inneren Halterung ein Spannstrang dient, der einen Zwischenraum zwischen den Enden der inneren Halterung überbrückt und dessen freies Ende nach mindestens einmaliger Umlenkung über die Lauffläche des Reifens zur äusseren Halterung geführt ist, wobei die innere Halterung an ihren Enden Drehzapfen für drehbare Anschlussstücke für den Spannstrang und/oder diesen mit den Anschlussstücken verbindende Anschlussteile aufweist und wobei in die Anschlussstücke, von denen mindestens eines mit einem Umlenkzapfen oder einer Umlenkrolle für den Spannstrang versehen ist, durch Endglieder von Kettenstrangabschnitten des Laufnetzes Bewegungen um die Drehzapfen einleitbar sind.

Aus den Fig. 1 bis 5 der DE-A-2 710 057 ist eine Gleitschutzkette der vorstehenden Art bekannt, bei der Anschlussstücke für den Spannstrang Verwendung finden, die aus jeweils mehreren Teilen bestehen, welche durch Schweissen zu einem vergleichsweise komplizierten Gebilde verbunden sind, dessen Herstellung zeitaufwendig und kostenintensiv ist. An die bekannten Anschlussstücke sind über einen Drahtbügel jeweils ein zur Lauffläche gerichteter Kettenstrangabschnitt und der Spannstrang angeschlossen. Die Einleitung von Kräften sowohl durch die Kettenstrangabschnitte als auch durch den Spannstrang in die Anschlussstücke bedingt eine stabile Bauweise derselben und eine verhältnismässig lange Führung der Anschlussstücke auf den Enden der inneren Halterung.

Ein ebenfalls vergleichsweise kompliziertes Anschlussstück zeigt auch die US-A-3 893 493. Dieses zweite bekannte Anschlussstück ist mit Hilfe einer Gabel und eines Bolzens an das Ende einer als Kette ausgebildeten inneren Halterung angeschlossen, an ihm greift weder ein zum Laufnetz führender Kettenstrang an noch ist es drehbar gegenüber der inneren Halterung angeordnet.

Bekannt ist schliesslich aus der DE-U-7 721 756 eine Gleitschutzkette mit einer von einem Drahtseil gebildeten äusseren Halterung an deren Enden um jeweils 360° drehbar Kettenstrangabschnitte eines Laufnetzes und Wirbelösen gelagert sind, wobei durch die Kettenstrangabschnitte jedoch keine Drehbewegungen in die Wirbelösen eingeleitet werden und auch keine der Wirbelösen als Umlenkung für den Spannstrang ausgebildet ist.

Der Erfindung liegt die Aufgabe zugrunde, eine Gleitschutzkette der zuerst beschriebenen Gattung zu schaffen, die bei einfachem und kostengünstigem Aufbau ein störungsfreies Wenden des Kettennetzes und eine bequeme Montage ermöglicht.

Die vorstehende Aufgabe wird erfindungsgemäss dadurch gelöst, dass die Anschlussstücke als Stanzteile ausgebildete Grundkörper mit jeweils einem Steg aufweisen und dass jeweils ein Endglied eines Kettenstrangabschnittes des Laufnetzes in unmittelbarer Nähe jeweils eines Endes der inneren Halterung gemeinsam mit dem Steg um 360° drehbar auf einem Drehzapfen gelagert ist.

Die erfindungsgemässe Gleitschutzkette bietet den Vorteil, dass ihre Anschlussstücke leicht gebaut sein können, da keine von Kettenstrangabschnitten des Laufnetzes herrührenden Kräfte in sie eingeleitet werden. Der einfache Aufbau der Anschlussstücke wirkt sich dabei insofern besonders positiv aus, weil Gleitschutzketten bekanntlich in grossen Stückzahlen hergestellt werden. Beim Wenden der Kette werden die Anschlussstücke gemeinsam mit den auf den Drehzapfen gelagerten Endgliedern der Kettenstrangabschnitte gedreht, so dass auch insofern keine Probleme auftreten.

Weitere Einzelheiten und Merkmale ergeben sich aus den Unteransprüchen und der nachfolgenden Beschreibung eines in der beigefügten Zeichnung dargestellten Ausführungsbeispieles. Es zeigen:

Fig. 1 die perspektivische Ansicht einer erfindungsgemässen Gleitschutzkette;

Fig. 2 ein Anschlussstück der Gleitschutzkette gemäss Fig. 1 und

Fig. 3 eine Einzelheit des Anschlussstückes gemäss Fig. 2.

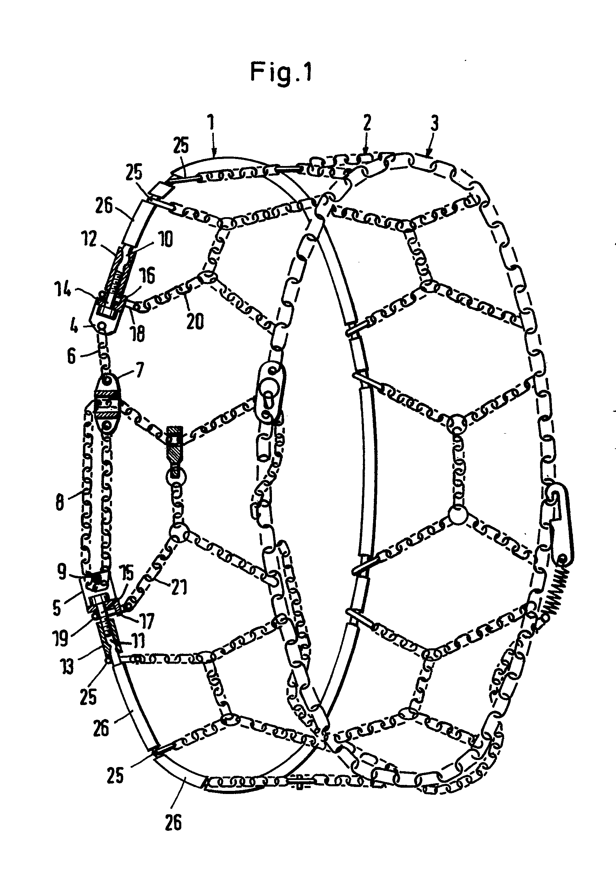

In Fig. 1 ist 1 eine innere Halterung für ein Kettennetz 2 einer Gleitschutzkette, das zwischen der inneren Halterung 1 und einer von einer endlosen Seitenkette gebildeten äusseren Halterung 3 angeordnet ist. Die innere Halterung 1 wird von einem federnden Stahlbügel gebildet, an dessen Enden Anschlussstücke 4 und 5 angeordnet sind. Die Anschlussstücke 4 und 5 sind dabei gegenüber dem Hauptteil der inneren Halterung um 360° drehbar gelagert. Mit dem Anschlussstück 4 ist über mehrere Kettenglieder 6 eine von einer Gleithülse gebildete Umlenkung 7 für einen Spannstrang 8 verbunden. Das Anschlussstück 5 ist mit einem Umlenkzapfen 9 für den Spannstrang 8 versehen.

Um die volle Drehbarkeit der Anschlussstücke 4 und 5 zu ermöglichen, sind auf die gewellten Enden 10 und 11 des die innere Halterung 1 bildenden Stahlbügels Hülsen 12 und 13 aufgepresst. In diese Hülsen 12 und 13 sind Drehzapfen 14 und 15 für die Anschlussstücke 4 und 5 geschraubt oder ebenfalls eingepresst.

Jedes der Anschlussstücke 4 und 5 ist mit einem Vorsprung 16 bzw. 17 versehen. Die Vorsprünge 16, 17 ragen in das Innere von Kettengliedern 18, 19, die an den Enden von Kettenstrangabschnitten 20, 21 des Laufnetzes 2 angeordnet sind und die Drehzapfen 14, 15 umschliessen.

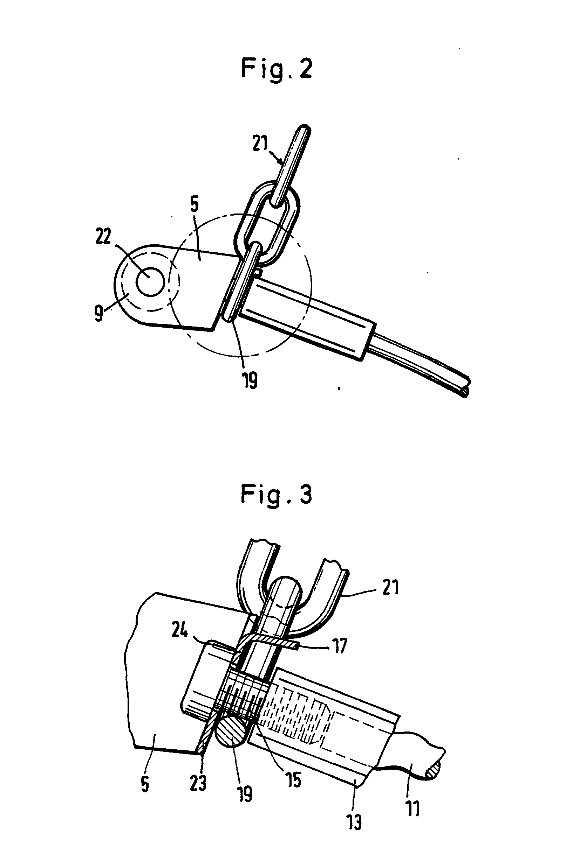

Fig. 2 zeigt ein Anschlussstück 5 mit einem Umlenkzapfen 9 für den Spannstrang 8, dessen Achse 22 auf einem Kreis um die Reifenachse liegt, dessen Durchmesser kleiner ist als der Durchmesser des übrigen Teils der inneren Halterung. Die Achse 22 ist mit anderen Worten leicht zum Zentrum der inneren Halterung 1 versetzt angeordnet.

In Fig. 3 ist eine Einzelheit von Fig. 2 dargestellt. Man erkennt, dass das Anschlussstück 5 von einem Stanzteil gebildet wird, das einen Steg 23 aufweist, der mit einer Bohrung 24 für den von einer Innensechskantschraube gebildeten Drehzapfen 15 versehen ist.

Es versteht sich, dass nicht nur die Anschlussstücke 4 und 5 und die Kettenglieder 18 und 19 drehbar um die Längsachse der inneren Halterung 1 gelagert sind, sondern dass auch die Kettenglieder 25, welche das Kettennetz 2 mit der inneren Halterung 1 verbinden, um die Längsachse der inneren Halterung 1 Drehbewegungen ausführen können. Die Lage der Kettenglieder 25 auf der inneren Halterung wird im übrigen durch Abstandshalter 26 definiert, die entweder von Kunststoffschlauchabschnitten gebildet werden oder aber unmittelbar auf den die innere Halterung 1 bildenden federnden Stahlbügel aufgespritzt sind.

Beim Ordnen und Entwirren der Kette werden sowohl die Laufnetzteile als auch die Anschlussstücke 4, 5 aufgrund des Eigengewichtes des Laufnetzes in ihre richtige Lage gedreht, wobei die Drehung der Anschlussteile 4, 5 über die Vorsprünge 17 in die Anschlussteile eingeleitet wird.

Statt eines Umlenkzapfens 9 kann selbstverständlich auch eine Umlenkrolle Verwendung finden.

**Patentansprüche**

1. Gleitschutzkette für Fahrzeugreifen mit je einer bei montierter Kette gegen die Innenseite und die Aussenseite des Reifens zur Anlage kommenden Halterung (1, 3) für sich über die Lauffläche erstreckende, drehbar an der inneren Halterung gelagerte Kettenstrangabschnitte, bei der zum Spannen der über den Reifen stülpbaren, von einem federnden Stahlbügel gebildeten inneren Halterung (1) ein Spannstrang (8) dient, der einen Zwischenraum zwischen den Enden der inneren Halterung (1) überbrückt und dessen freies Ende nach mindestens einmaliger Umlenkung über die Lauffläche des Reifens zur äusseren Halterung (3) geführt ist, wobei die innere Halterung (1) an ihren Enden Drehzapfen (14, 15) für drehbare Anschlussstücke (4, 5) für den Spannstrang (8) und/oder diesen mit den Anschlussstücken (4, 5) verbindende Anschlussteile (6, 7) aufweist und wobei in die Anschlussstücke (6, 7) von denen mindestens eines (5) mit einem Umlenkzapfen (9) oder einer Umlenkrolle für den Spannstrang (8) versehen ist, durch Endglieder (18, 19) von Kettenstrangabschnitten (20, 21) des Laufnetzes (2) Bewegungen um die Drehzapfen (14, 15) einleitbar sind, dadurch gekennzeichnet, dass die Anschlussstücke (4, 5) als Stanzteile ausgebildete Grundkörper mit jeweils einem Steg (23) aufweisen und dass jeweils ein Endglied (19) eines Kettenstrangabschnittes (20, 21) des Laufnetzes in unmittelbarer Nähe jeweils eines Endes der inneren Halterung (1) gemeinsam mit dem Steg (23) um 360° drehbar auf einem Drehzapfen (14, 15) gelagert ist.

2. Gleitschutzkette nach Anspruch 1, dadurch gekennzeichnet, dass jedes Anschlussstück (4, 5) einen Vorsprung (16, 17) aufweist, der in das Innere des den jeweiligen Drehzapfen (14, 15) umschliessenden Endgliedes (18, 19) ragt.

3. Gleitschutzkette nach Anspruch 1 oder 2, dadurch gekennzeichnet, dass der Steg (23) einen ersten seitlichen Begrenzungsanschlag für das den jeweiligen Drehzapfen (14, 15) umschliessende Endglied (18, 19) bildet.

4. Gleitschutzkette nach einem der Ansprüche 1 bis 3, dadurch gekennzeichnet, dass die Drehzapfen (14, 15) von jeweils einer auf die Enden des Stahlbügels aufgepressten Hülse (12, 13) gehalten werden.

5. Gleitschutzkette nach Anspruch 4, dadurch gekennzeichnet, dass die dem Steg (23) zugewandte Stirnfläche der jeweiligen Hülse (12, 13) einen zweiten seitlichen Begrenzungsanschlag für das den jeweiligen Drehzapfen (14, 15) umschliessende Kettenglied (18, 19) bildet.

6. Gleitschutzkette nach einem der Ansprüche 1 bis 5, dadurch gekennzeichnet, dass die Enden des Stahlbügels (1) im Bereich der Hülsen (12, 13) gewellt sind.

7. Gleitschutzkette nach einem der Ansprüche 1 bis 6, dadurch gekennzeichnet, dass die Drehzapfen (14, 15) von Innensechskantschrauben gebildet werden.

8. Gleitschutzkette nach einem der Ansprüche 1 bis 7, dadurch gekennzeichnet, dass mindestens eines der Anschlussstücke (4, 5) mit einem Umlenkzapfen (9) für den Spannstrang versehen ist und die Achse (21) des Umlenkzapfens auf einem Durchmesser liegt, der kleiner ist als der Durchmesser des Hauptteiles der inneren Halterung (1).

**Claims**

1. Anti-skid tyre chain with a retainer (1, 3) on each side coming into contact with the inside and the outside of the tyre when the chain is fitted, for chain strand sections extending over the tread and mounted rotatably at the inner retainer, with which a tensioning strand (8) serves for tensioning the inner retainer (1), which is formed by a resilient steel bow and can be draped over the tyre, which tensioning strand bridges a space between the ends of the inner retainer (1) and the free end of which is led over the tread of the tyre to the outer retainer (3) after returning back on itself at least once, the inner retainer (1) having, at its end, swivel pins (14, 15) for rotatable connecting pieces (4, 5) for the tensioning strand (8) and/or connecting parts (6, 7) connecting said tensioning strand to the connecting pieces (4, 5) and movements about the swivel pins (14, 15) being introduceable through end members (18, 19) of chain strand sections (20, 21) of the tread network (2) into the connecting pieces (4, 5) of which at least one (5) is provided with a return pin (9) or a return pulley for the tensioning strand (8), characterized in that the connecting pieces (4, 5) have basic elements designed as punched parts in each case with a web (23) and in that in each case an end member (19) of a chain strand section (20, 21) of the tread network is mounted to rotate through 360° on a swivel pin (14, 15) in the direct vicinity of one end in each case of the inner retainer (1) together with the web (23).

2. Anti-skid chain according to Claim 1, characterized in that each connecting piece (4, 5) has a projection (16, 17) which protrudes into the interior of the end member (18, 19) surrounding the respective swivel pin (14, 15).

3. Anti-skid chain according to Claim 1 or 2, characterized in that the web (23) forms a first lateral limiting stop for the end member (18, 19) surrounding the respective swivel pin (14, 15).

4. Anti-skid chain according to one of Claims 1 to 3, characterized in that the swivel pins (14, 15) are retained by a sleeve (12, 13) in each case, pressed onto the ends of the steel bow.

5. Anti-skid chain according to Claim 4, characterized in that the face of the respective sleeve (12, 13) facing the web forms a second lateral limiting stop for the end member (18, 19) surrounding the respective swivel pin (14, 15).

6. Anti-skid chain according to one of Claims 1 to 5, characterized in that the ends of the steel bow (1) are corrugated in the region of the sleeves (12, 13).

7. Anti-skid chain according to one of Claims 1 to 6, characterized in that the swivel pins (14, 15) are formed by hexagon socket screws.

8. Anti-skid chain according to one of Claims 1 to 7, characterized in that at least one of the connecting pieces (4, 5) is provided with a return pin (9) for the tensioning strand and the axis (21) of the return pin lies on a diameter which is smaller than the diameter of the main part of the inner retainer (1).

**Revendications**

1. Chaîne antidérapante pour pneumatiques de véhicule comportant, pour chaque flanc, une fixation (1, 3) qui, dans la chaîne montée, vient en appui contre le flanc interne ou le flanc externe du pneumatique et qui est prévue pour des tronçons de brin de chaîne qui s'étendent par-dessus la bande de roulement et qui sont montées de manière pivotante sur la fixation intérieure, avec, pour tendre la fixation intérieure (1) formée d'un arceau d'acier élastique et retournable par-dessus le pneumatique, un brin de tension (8) qui recouvre un espace intermédiaire situé entre les extrémités de la fixation intérieure (1) et dont une extrémité libre est guidée, après avoir été renvoyée au moins une fois au-dessus de la bande de roulement du pneumatique, jusqu'à la fixation extérieure (3), et où la fixation intérieure (1) comporte à ses extrémités des doigts rotatifs (14, 15) prévus pour des pièces rotatives de jonction (4, 5) prévues pour le brin de tension (8) et/ou des éléments de jonction (6, 7) reliant ceci aux pièces de jonction (4, 5), et/ou les pièces de jonction (4, 5) dont au moins une (5) est munie d'un doigt de renvoi (9) ou d'un rouleau de renvoi pour le brin de tension (8), peuvent se déplacer autour des doigts rotatifs (14, 15) à l'aide des membres extrêmes (18, 19) de tronçons de brin de chaîne (20, 21) du réseau de roulement (2), caractérisée en ce que les pièces des jonctions (4, 5) comportent des corps de base réalisés sous forme d'éléments emboutis présentant à chaque fois une barrette (23), et en ce qu'à chaque fois un membre extrême (19) d'un tronçon de brin de chaîne (20, 21) du réseau de roulement est monté, en commun avec la barrette (23), rotatif sur 360° sur un doigt rotatif (14, 15), à proximité immédiate à chaque fois d'une extrémité de la fixation intérieure (1).

2. Chaîne antidérapante selon la revendication 1, caractérisée en ce que chaque pièce de jonction (4, 5) comporte une saillie (16, 17) qui se dresse dans l'intérieur du membre extrême (18, 19) entourant le doigt rotatif associé (14, 15).

3. Chaîne antidérapante selon la revendication 1 ou 2, caractérisée en ce que la barette (23) constitue une première butée latérale d'arrêt pour le membre extrême (18, 19) entourant le doigt rotatif associé (14, 15).

4. Chaîne antidérapante selon l'une des revendications 1 à 3, caractérisée en ce que les doigts rotatifs (14, 15) sont maintenus à chaque fois par une douille (12, 13) emmanchée par pression sur les extrémités de l'arceau d'acier.

5. Chaîne antidérapante selon la revendication 4, caractérisée en ce que la face frontale de la douille associée (12, 13) qui est tournée vers la barrette (23) constitue une deuxième butée latérale d'arrêt pour le membre extrême (18, 19) entourant le doigt rotatif associé (14, 15).

6. Chaîne antidérapante selon l'une des revendications 1 à 5, caractérisée en ce que les extrémités de l'arceau d'acier (1) sont ondulées dans la zone des douilles (12, 13).

7. Chaîne antidérapante selon l'une des revendications 1 à 6, caractérisée en ce que les doigts rotatifs (14, 15) sont constitués par des vis à six pans creux.

8. Chaîne antidérapante selon l'une des revendications 1 à 7, caractérisée en ce qu'au moins l'une des pièces de jonction (4, 5) est munie d'un doigt de renvoi (9) pour le brin de tension, et l'axe (21) du doigt de renvoi se trouve sur un diamètre qui est plus petit que le diamètre de la partie principale de la fixation intérieure (1).

# Fig.1

# Fig. 2

# Fig. 3